Europäisches Patentamt

European Patent Office

Office européen des brevets

(19)

(11) **EP 0 535 762 B1**

(12) **FASCICULE DE BREVET EUROPEEN**

(45) Date de publication et mention
de la délivrance du brevet:
**23.04.1997 Bulletin 1997/17**

(51) Int Cl.6: **H04L 5/22**, H04J 13/00,
H04B 7/15, H04L 12/56,
H04J 3/16

(21) Numéro de dépôt: **92203053.1**

(22) Date de dépôt: **02.10.1992**

(54) **Procédé d'allocation de ressources par réservation anticipée dans un réseau satellite à intégration de services**

Zuweisung von Mitteln in einem dienste-integrierenden Satelliten-Netzwerk durch vorzeitige Reservierung

Method for resource allocation by anticipated reservation in a satellite network with service integration

(84) Etats contractants désignés:
**DE GB**

(30) Priorité: **04.10.1991 FR 9112257**

(43) Date de publication de la demande:
**07.04.1993 Bulletin 1993/14**

(73) Titulaire: **FRANCE TELECOM**
**75015 Paris (FR)**

(72) Inventeurs:
- **Zein Al Abedeen, Tarif**
**F-31400 Toulouse (FR)**
- **Maral, Gérard**
**F-31120 Goyrans (FR)**
- **Seret, Dominique**
**F-91190 Gif sur Yvette (FR)**

- **Tondriaux, Marc**
**F-31320 Castanet (FR)**

(74) Mandataire: **Martinet & Lapoux**
**BP 405**
**78055 St. Quentin en Yvelines Cédex (FR)**

(56) Documents cités:
**EP-A- 0 433 699          US-A- 4 736 371**

- **PROCEEDINGS OF THE IEEE. vol. 79, no. 2, Février 1991, NEW YORK US pages 170 - 189 J.J. BAE ET AL. 'Survey of Traffic Control Schemes and Protocols in ATM Networks'**
- **INFOCOM'89. 23. - 27 Avril 1989; OTTAWA, CA vol. 2; pages 632 - 640 F. DELLI PRISCOLI ET AL. : ' ACCESS AND SWITCHING TECHNIQUES IN AN ATM USER-ORIENTED SATELLITE SYSTEM '**

**EP 0 535 762 B1**

## Description

La présente invention concerne de manière générale le contrôle de ressources pour des réseaux de télécommunications par satellite mettant en oeuvre la technique temporelle asynchrone ATM (Asynchronous Transfer Mode).

Après l'introduction des services offerts par les réseaux numériques à intégration de services à "bande étroite", les concepteurs de réseaux ont pressenti la nécessité de réaliser à moyen terme un réseau plus performant. Cette nécessité était basée sur les considérations suivantes : un réseau numérique à "bande étroite" n'autorise pas une intégration complète des services de télécommunication existants ou "futuristes", Les réseaux numériques existants ne satisfont pas pleinement les besoins en rapport avec des communications de données à très haut débit, des services engendrant un flux de trafic à caractère très sporadique, ou à plus long terme, des vidéocommunications. Ainsi la technique temporelle asynchrone ATM a été préconisée pour répondre à trois exigences : technique numérique, haut débit, et souplesse dans l'acheminement des divers types de communication.

Une stratégie internationale pour le développement de réseaux numériques à intégration de services à "large-bande" (RNIS-LB), définie par le CCITT, repose sur trois principes fondamentaux :

- une unité de transfert d'informations, appelée "cellule", ou également "paquet", qui est l'élément de base traité par tous les moyens constitutifs du réseau : terminaux, multiplexeurs et commutateurs. Typiquement une cellule ATM comprend 53 octets, 48 étant affectés à la transmission d'information et 5 au routage de la cellule dans le réseau,
- un traitement asynchrone des cellules par les divers moyens du réseau, et
- une technique en mode connecté : une communication doit être établie préalablement à tout transfert d'information. Le mode retenu est le mode "circuit virtuel" pour la transmission des cellules à travers les noeuds du réseau, du type comparable aux réseaux X.25.

Les réseaux classiques utilisant le mode circuit, composante principale du réseau numérique à intégration de services "à bande étroite", résolvent l'ensemble de leurs problèmes de contrôle de ressources à l'admission des appels dans le réseau : une fois un appel établi, une ressource à débit fixé est réservée à un usager. Bien entendu, le mode circuit ne conviendrait pas au réseau RNIS-LB pour des raisons évidentes de sous-utilisation des moyens de transmission dûe au caractère très sporadique de certaines communications .

La technique ATM repose, à l'opposé, sur des communications en mode-paquet et donc sur un fonctionnement en files d'attente. Néanmoins, contrairement aux techniques habituellement mises en oeuvre pour un contrôle de congestion des réseaux par paquets classiques, un surdimensionnement du réseau ou un contrôle de trafic de proche en proche entre noeuds du réseau est inconcevable pour un réseau à large-bande dans lequel les débits peuvent atteindre la centaine de Mbit/s. Les mécanismes de contrôle pénalisent sensiblement les temps de transmission et s'avèrent inefficaces. Une solution consiste à poser le problème à l'envers : si la congestion du réseau ne peut être contrôlée (dégradation des temps de transmission), elle doit être évitée par des mécanismes d'allocation de ressources lors des demandes d'accès au réseau. Mais cette condition préalable impose l'évaluation de la ressource à réserver en fonction du service : autant il est aisé de déterminer une ressource à réserver pour une demande de service à débit constant ou variable, autant il est difficile de définir une ressource à réserver pour des services à sporadicité élevée.

Lorsqu'un usager-source émet une demande d'établissement d'appel, la demande doit contenir l'adresse de destination mais également la capacité requise pour acheminer un trafic associé à la demande. Cette demande est acheminée à l'intérieur du réseau, d'un noeud à un autre, selon des chemins déterminés par un algorithme de routage. L'appel est accepté s'il existe au moins un chemin entre l'usager source et la destination tel que chaque liaison internodale dudit chemin possède une capacité suffisante pour satisfaire la capacité de transmission requise par l'usager. Le problème est posé : quelle capacité de débit doit être requise pour acheminer des trafics à flux très sporadiques?

La banalisation complète de la capacité du réseau rend difficile toute réponse, les connexions interagissant entre elles.

Une modification de l'infrastructure existante du réseau téléphonique pour une réalisation d'un réseau numérique à large-bande ne peut être envisagée à moyen terme. Ces raisons sont notamment basées sur des considérations financières, les moyens à mettre en oeuvre pour l'implantation d'un réseau numérique à large-bande terrestre étant considérables. Afin de pallier cette limitation, une solution naturelle plus souple et moins coûteuse consiste en l'utilisation de réseaux à large-bande par satellite. Le problème du contrôle des ressources reste néanmoins posé en des termes équivalents, dans ce cas pour un accès à un canal satellite.

La répartition temporelle d'un canal satellite entre plusieurs stations a été envisagée principalement selon deux techniques :

- la technique aléatoire visant à banaliser les ressources mais entraînant corollairement des fluctuations dans le retard de transmission des cellules dépassant largement les limites spécifiées pour les services conversationnels, tel que le service téléphonique, et

- la technique d'accès par réservation.

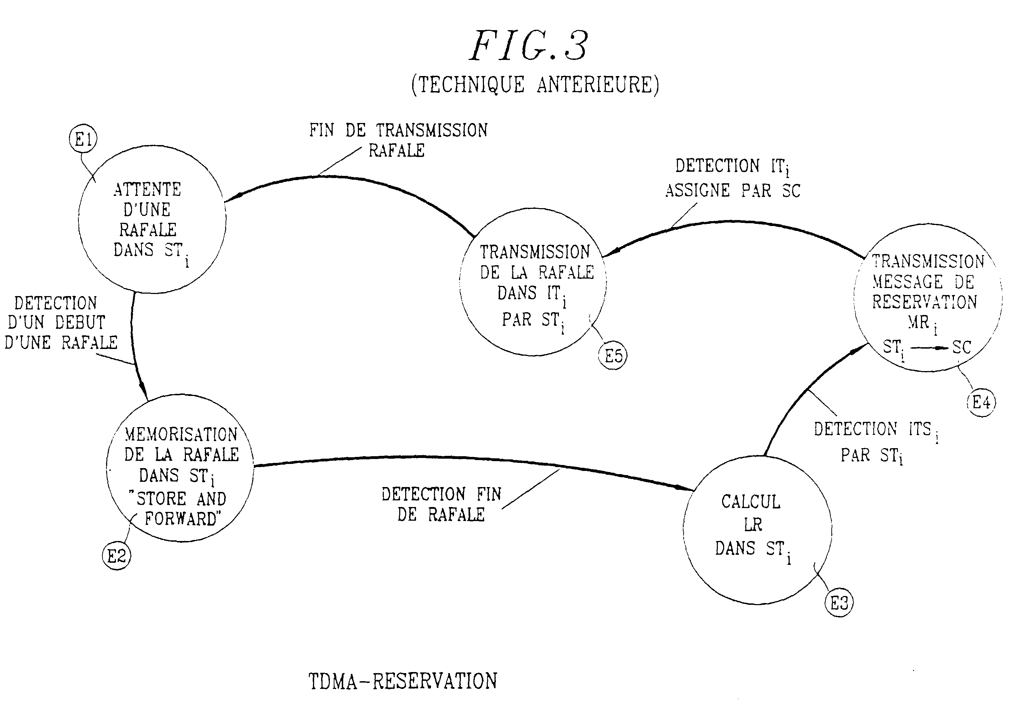

Selon cette dernière technique, contrairement à la technique d'accès aléatoire dans laquelle une connexion entraîne implicitement une "création" d'un intervalle temporel par synchronisation, des trames sont affectées périodiquement aux communications. Un format de trame reprenant le principe AMRT et utilisé dans le protocole TDMA-Réservation est montré à la Fig.2. Une trame $T_r$ est divisée en une sous-trame de données $STD_r$ et une sous-trame de signalisation $STS_r$. Les sous-trames $STD_r$ et $STS_r$ sont respectivement affectées à la transmission des données et à la transmission de messages de demande d'allocation/réponse d'allocation de ressource.

Selon certaines réalisations, la sous-trame $STS_r$ a une longueur variable en fonction du débit en ligne. Pour une station terrienne $ST_i$ effectuant une demande d'allocation de ressource, le protocole TDMA-Réservation consiste en la transmission d'un message de réservation dans un intervalle assigné $ITS_i$ d'une sous-trame de signalisation $STS_r$ après réception complète d'une rafale de cellules générée par un service à caractère sporadique d'une station d'usager. Une station centrale SC, réceptrice de tous les messages de réservation émanant de stations terriennes, affecte la capacité requise à la station terrienne $ST_i$ lorsqu'une capacité de transmission suffisante est disponible. Ce protocole TDMA-Réservation renseigne avantageusement la station centrale SC au moyen de la sous-trame de signalisation $STS_r$ sur une demande d'allocation précise puisque la station terrienne n'émet sa demande qu'après réception complète de la rafale, et donc prise en compte de la longueur de celle-ci. Néanmoins cette gestion "store and forward" qui consiste à emmagasiner la totalité de la rafale de cellules avant de traiter une demande d'allocation, n'est pas satisfaisante pour des services introduisant des rafales très longues puisqu'une telle gestion induit des retards de transmission inacceptables pour certains services (interrogation de banques d'images).

Par ailleurs, l'article de J.J. BAE et al., intitulé "Survey of Traffic Control Schemes and Protocols in ATM Networks", Proceedings of the IEEE., vol. 79, No. 2, février 1991, NEW YORK, pages 170-189, énonce un protocole d'acceptation ou de refus d'une connexion pour contrôler la congestion d'un réseau ATM. Selon un premier modèle, de nouvelles connexions sont acceptées tant que le taux de perte de cellules est inférieur à un seuil prédéterminé. Un second modèle est basé sur des notions probabilistes. Cet article n'aborde pas l'allocation de ressources rafale par rafale.

La présente invention vise à rémédier aux inconvénients précités et plus particulièrement à fournir un procédé pour réduire le temps nécessaire à une allocation de ressource, en transmettant une demande d'allocation de ressource dans la sous-trame de signalisation pour une rafale d'une connexion sporadique bien avant que cette rafale soit complètement reçue par la station terrienne. Pour chaque rafale de la connexion une demande d'allocation de ressource est alors transmise par une station terrienne à la station centrale préalablement à la réception complète dans la station terrienne de ladite rafale. Aucune information sur Les longueurs des rafales de la connexion ne pouvant alors être transmise respectivement dans les demandes d'allocation, l'invention prévoit un algorithme permettant sélectivement, d'accepter ou de refuser l'établissement d'une connexion. Après l'acceptation de la connexion, les demandes d'allocation de ressource relatives aux rafales de cette connexion sont alors satisfaites successivement, quel que soit le traffic.

A cette fin, un procédé d'allocation de ressources à des stations terriennes par une station centrale dans un réseau de télécommunications temporel asynchrone par satellite, les stations terriennes recevant des rafales de cellules de données transmises par des stations d'usagers au cours de connexions sporadiques respectives, lesdites rafales étant transmises dans une sous-trame de données d'une trame périodique à accès multiple à répartition dans le temps, une connexion sporadique étant définie par une longueur moyenne des rafales à transmettre au cours de ladite connexion, une sporadicité et un débit maximum, une station terrienne ayant reçu complètement une rafale transmettant un message de fin qui inclut la longueur de la rafale, dans une sous-trame de signalisation de la trame périodique vers la station centrale afin de libérer une ressource allouée à la rafale dans la sous-trame de données lorsque toute la rafale est transmise par la station terrienne, est caractérisé par

- la décision d'une acceptation ou d'un refus d'une connexion sporadique donnée à établir suite à une demande de connexion sporadique dans la sous-trame de signalisation par une station terrienne, ladite décision étant déterminée en fonction d'un algorithme dans lequel les longueurs moyennes des rafales et sporadicités sont considérées comme des constantes prédéterminées et qui dépend de débits binaires maximums et de débits binaires moyens des connexions en cours et de ladite connexion donnée, le débit binaire maximum et ledit débit binaire moyen relatifs à ladite connexion sporadique donnée étant inclus dans ladite demande de connexion,
- suite à l'acceptation de la demande de connexion sporadique, la transmission d'une demande d'allocation de ressource dans la sous-trame de signalisation par la station terrienne vers la station centrale en réponse au début de la réception et de la mémorisation de chacune des rafales de la connexion donnée dans la station terrienne, et
- la réservation anticipée d'une ressource sous la forme d'un intervalle temporel dans la sous-trame de données à la rafale par la station centrale dès qu'un intervalle de temps de la sous-trame de données est libéré afin que la station terrienne puisse commencer à transmettre la rafale tout en continuant à mémoriser la rafale.

EP 0 535 762 B1

Selon une caractéristique de l'invention l'algorithme consiste, pour ladite demande de connexion sporadique, à calculer un rapport de charge équivalent pour les connexions sporadiques en cours ainsi que pour ladite connexion donnée en fonction notamment desdites constantes et des débits binaires maximums des connexions sporadiques, à calculer la somme des débits moyens des connexions sporadiques, à calculer le produit de ladite somme par ledit rapport de charge équivalent, et à accepter la demande de connexion lorsque ledit produit est inférieur à une capacité totale disponible pour les connexions sporadiques.

L'invention prévoit également que des connexions à débits constants soient établies entre stations d'usagers dans le réseau. L'algorithme pour une connexion à débit constant consiste alors à soustraire le débit constant à la capacité totale disponible pour établir une seconde capacité disponible pour les connexions sporadiques, à calculer ledit produit pour des connexions sporadiques en cours, et à accepter la demande de connexion à débit constant lorsque ledit produit est inférieur à la seconde capacité disponible.

D'autres avantages et caractéristiques de la présente invention apparaîtront plus clairement à la lecture de la description suivante d'une réalisation préférée de l'invention en référence aux dessins annexés correspondants dans lesquels :

- les Figs.1A et 13 montrent respectivement un réseau à large-bande par satellite et une représentation temporelle d'une communication sporadique dans ce réseau;
- la Fig.2 montre un format de trame utilisée dans le protocole TDMA-Réservation selon la technique antérieure et mettant en oeuvre le mode AMRT (Accès multiple à répartition dans le temps);
- la Fig.3 est un diagramme d'états selon le protocole TDMA-Réservation;
- la Fig.4 est un diagramme d'états du procédé d'allocation de ressources selon l'invention;
- les Figs.5A, 53, et 5C sont des diagrammes temporels d'échange de signaux à des fins de comparaison des performances entre le protocole TDMA-Réservation et le procédé selon l'invention;
- la Fig.6 est un schéma de répartition du trafic dans un réseau numérique à large-bande;
- les Figs.7, 8 et 9 sont des diagrammes pour une élaboration d'un algorithme d'acceptation/refus d'une connexion pour la mise en oeuvre du procédé selon l'invention;
- les Figs.10 et 11 sont des diagrammes pour expliquer des équivalences de paramètres selon le procédé selon l'invention;
- la Fig.12 montre l'algorithme d'acceptation/refus de connexion selon l'invention; et
- la Fig.13 est un bloc-diagramme schématique d'un automate de refus/acceptation de connexion pour une implantation de l'algorithme selon l'invention.

Dans une première partie de la description ci-après, une présentation de l'intérêt du procédé selon l'invention est introduite comparativement au protocole connu TDMA-Réservation concernant l'émission par chaque station terrienne d'une transmission d'une demande d'allocation de ressource pour chaque rafale reçue. Cette comparaison pourrait être étendue à tout type de protocole connu utilisant un mode de réservation de ressource non anticipé.

Une seconde partie de la description a trait à un algorithme selon l'invention, implanté dans une station centrale et permettant de déterminer si une demande de connexion doit ou ne doit pas être acceptée. En effet, selon l'invention, les demandes d'allocation de ressource pour les rafales transmises durant une connexion sont indépendantes des caractéristiques desdites rafales et toutes doivent donc être satisfaites.

Un mode particulier de mise en oeuvre de l'invention est décrit dans la suite de la description et concerne une architecture bi-faisceaux de réseau satellite. Il sera naturellement apprécié par l'homme du métier que des modifications peuvent être introduites dans le cadre de l'invention. Par exemple, l'invention est applicable à une architecture mono-faisceau ou comportant un nombre quelconque de faisceaux de réseau satellite.

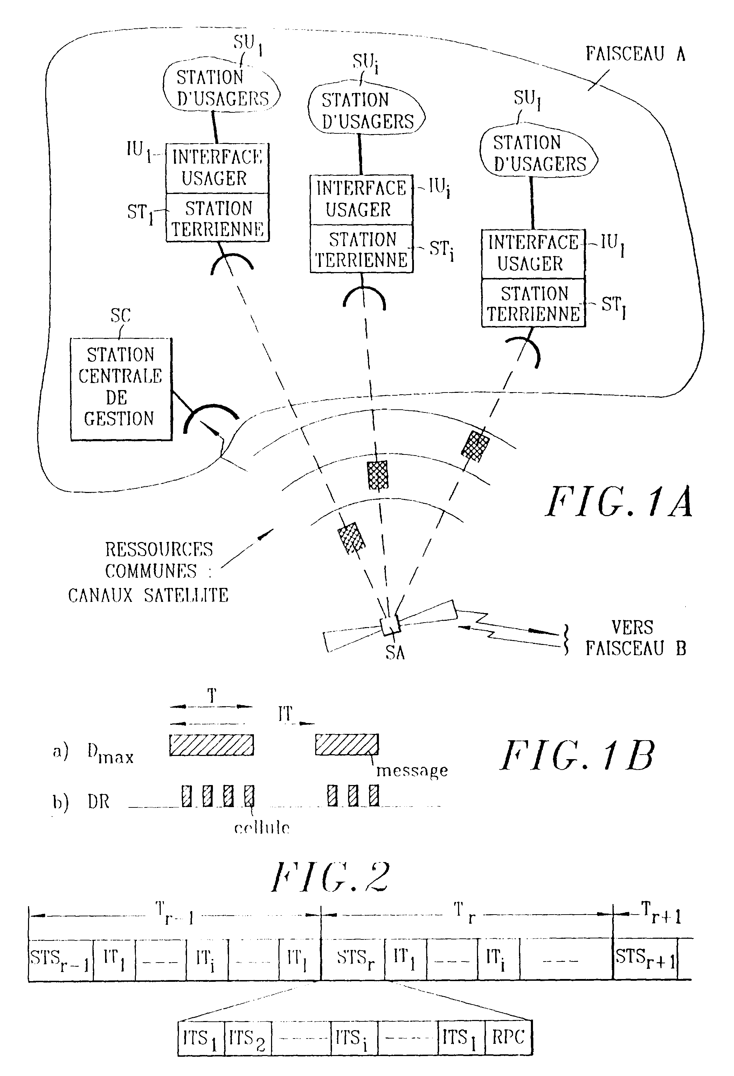

La Fig.1A réprésente schématiquement une architecture de réseau numérique large-bande bi-faisceaux. Le réseau établit des communications entre un groupe de premières stations d'usagers $SU_1$, ...$SU_i$, ...$SU_I$ d'un premier faisceau A, et un groupe de secondes stations d'usagers d'un second faisceau B (non représenté) via un satellite, par exemple dans un contexte de communications intercontinentales. Le terme "station d'usagers" désigne arbitrairement un poste d'usager ou terminal, ou bien un réseau local auquel est rattachée une pluralité de postes d'usagers. Les stations d'usagers $SU_i$, i étant un entier variant entre 1 et I, sont rattachées à des stations terriennes respectives $ST_i$, à travers des interfaces usagers $IU_i$.

Les stations terriennes assurent, en outre, des fonctions de modulation et de codage des informations transmises par les différentes stations d'usagers pour une retransmission vers le satellite SA. Une station centrale de gestion SC assure la gestion instantanée de la ressource commune : au moins un canal satellite à fréquence porteuse, la supervision et le contrôle des différentes stations terriennes $ST_1$ à $ST_I$, et l'établissement et la libération des connexions comme il sera vu par la suite. Dans le faisceau B (non représenté), une station de contrôle réalise une fonction dite "écho"; cette fonction "écho" consiste essentiellement à retransmettre vers le faisceau opposé, ici le faisceau A, la sous-trame de signalisation reçue de ce faisceau opposé dans des trames au format AMRT. Notamment cette fonction

4

"écho" contribue à la retransmission de messages de demande de connexion et de demande d'allocation de ressource, transmis par les stations terriennes dans la sous-trame de signalisation, vers la station centrale SC, garante des décisions d'acceptation des connexions. Comme déja signalé, la technique numérique a large-bande interdit un contrôle des flux entre liaisons par des procédés classiques. Des mécanismes d'allocation de ressources doivent être mis en oeuvre précisément avant un accès aux ressources. C'est le rôle de la station centrale SC de gérer l'ensemble des demandes de connexion que requièrent les stations terriennes $ST_i$ pour satisfaire le mécanisme d'allocation de ressource selon l'invention.

Suite à une acceptation de connexion par la station centrale SC à une station terrienne $ST_i$, des rafales de la connexion sont transmises entre la station terrienne $ST_i$ et une autre station quelconque du faisceau 3 via le satellite SA.

Comme montré à la Fig.1B, les différents services sporadiques intégrés dans les différentes stations d'usagers du réseau numérique à "large-bande" génèrent, durant des connexions respectives, des messages de longueurs variables T (ligne a), les longueurs étant exprimées en nombre de bits. Les messages transitent dans le réseau sous forme de cellules ATM (ligne b) déjà définies ci-dessus. Ces différents services numériques constituent des sources de trafic sporadique qui sont caractérisées par des intervalles de temps relativement longs IT entre des messages successifs dont les bits sont générés à un débit maximal $D_{max}$. Les trois paramètres suivants définissent le trafic d'une source:

- le débit binaire moyen de génération de message $D_{moy} = T_m/IT_m$, où $T_m$ et $IT_m$ dénotent la longueur moyenne d'un message et l'intervalle moyen séparant deux messages,
- la sporadicité SP du service de la source $SP = D_{max}/D_{moy}$, et
- la longueur moyenne des rafales exprimée en nombre de cellules.

Comme montré à la ligne b de la Fig.1B, les différents messages générés par un service numérique (ligne a) sont transmis dans le réseau numérique sous forme de cellules ATM selon la norme établie. Le mot "rafale" utilisé ci-après désigne un ensemble de cellules au format ATM provenant de la segmentation d'un message de service à caractère sporadique en des cellules transmises au débit binaire du réseau DR supérieur à $D_{max}$.

A des fins de simplification, il est uniquement décrit des procédés (ou protocoles) d'allocation de ressources à des stations terriennes $ST_1,...ST_i,...ST_I$ par la station centrale SC sans tenir compte de l'ensemble des fonctions définies dans le modèle de référence du protocole ATM pour réseau satellite, telles que segmentation de messages en rafales, cadrage des cellules transmises par les diverses stations d'usagers d'un groupe et reçues par les stations terriennes respectives de ce groupe, modulation, etc. Ainsi les procédés (ou protocoles) définis tout au long de la description doivent être perçus comme des "couches" dans un modèle plus général d'interconnexion via satellite.

Les connexions établies entre les stations terriennes des deux faisceaux sont de deux types en fonction de la nature des services :

des connexions à débit constant correspondant à des communications en "mode-circuit" et ainsi caractérisées par des trains "continus" de cellules ATM, et
des connexions à caractère sporadique définies par des trains de cellules espacés par des intervalles de temps relativement longs.

En référence à la Fig.3, un diagramme d'états E1 à E5 pour une station terrienne $ST_i$ établissant des connexions via le satellite SA à travers la station centrale SC, est relatif au protocole TDMA-Réservation, protocole d'allocation de ressources rafale par rafale. Ce protocole connu est mis en oeuvre pour une allocation dynamique de ressources par la station centrale SC aux diverses stations terriennes afin d'établir des communications via le satellite SA. La station centrale SC gère, en outre, les allocations de ressources attribuées aux diverses stations terriennes $ST_i$ pour des connexions à établir via le satellite SA.

Dans un premier état E1, la station terrienne $ST_i$ est en attente d'une rafale. Comme déjà signalé, cela signifie que la station $ST_i$ est en attente de réception d'une rafale de message produite par l'une des connexions sporadiques établies par cette station $ST_i$ (Fig. 1A). Dès la détection du début de rafale, la station terrienne $ST_i$ est dans un second état E2 pour mémoriser la rafale. Cette mémorisation est effectuée selon le mécanisme "store and forward" signifiant qu'aucune action n'est entreprise par la station terrienne $ST_i$ avant une mémorisation complète de la rafale. Après la détection de la fin de la rafale, la station terrienne $ST_i$ calcule la longueur de la rafale LR exprimée en nombre de cellules reçues (état E3), les cellules ayant une longueur constante exprimée en un nombre de bits. Après le calcul de la longueur de la rafale, correspondant à une ressource donnée nécessaire à la station terrienne $ST_i$ pour transmettre la rafale via le satellite SA, la station $ST_i$ est en attente d'un intervalle temporel de signalisation $ITS_i$ qui lui est affecté dans la trame au format AMRT montré à la Fig. 2 (état E4).

Dans un message de réservation $MR_i$ transmis dans l'intervalle temporel $ITS_i$ qui lui est affecté, la station terrienne $ST_i$ transmet une demande de réservation de ressource accompagnée d'une information concernant la longueur de la rafale LR à transmettre. Un dispositif d'allocation de ressources dans la station centrale SC reçoit le message de réservation $MR_i$ par retransmission écho d'un terminal du faisceau B. Ce dispositif d'allocation gère différentes demandes de réservation transmises au moyen de messages de réservation respectifs $MR_1$,...$MR_I$ par les différentes stations terriennes $ST_1$,...$ST_I$ afin d'allouer des ressources. Suite à la réception par la station centrale SC du message de réservation $MR_i$ émis par la station terrienne $ST_i$, le dispositif d'allocation de la station centrale SC attribue des ressources à la station terrienne $ST_i$ à l'expiration d'un temps d'attente Ta fonction du trafic dans le réseau. Cette attribution de ressources se traduit par une allocation d'un intervalle temporel $IT_i$ dans une sous-trame de données $STD_j$ à la station terrienne $ST_i$ par la station centrale SC. La longueur de l'intervalle temporel $IT_i$ assigné à la station terrienne $ST_i$ est directement proportionnelle à la longueur de la rafale transmise dans le message de réservation $MR_i$. Ainsi, pour une durée fonction de la longueur LR de la rafale, une ressource (état E5) est attribuée à la station terrienne $ST_i$ afin que cette dernière transmette l'intégralité de la rafale reçue, sous forme de cellules ATM. A la fin de la transmission de la rafale par la station terrienne $ST_i$ correspondant à une libération de ressources ou d'intervalle temporel $IT_i$ par la station centrale SC, la station $ST_i$ revient dans le premier état E1 d'attente d'une rafale suivante.

Les inconvénients de l'utilisation du protocole TDMA-Réservation dans un réseau numérique à large-bande résultent de deux considérations antagonistes pour des transmissions de rafales de longues durées :

- Les "temps de réaction" du réseau doivent être très courts pour fournir aux utilisateurs des qualités de services de bon niveau dans des domaines aussi variés que l'image, l'interrogation en temps réel de bases de données, etc...
- La technique temporelle asynchrone est avant tout une technique en mode-paquet basée sur une gestion de files d'attente.

Or, comme montré dans le diagramme d'états de la Fig.3, une demande d'allocation de ressources à la station centrale SC par une station terrienne $ST_i$ au moyen d'un message de réservation $MR_i$ n'est réalisée que suite à la mémorisation complète de la rafale, pour une transmission de cette rafale à la station terrienne destinataire. Le dispositif d'allocation de ressources de la station centrale SC ne reçoit donc le message de réservation que suite à un délai $T_1$ tel que $T_1 = TR + 2T_t$, où TR est la durée de la rafale et $2T_t$ est le temps de transmission aller-retour du message de réservation entre la station terrienne $ST_i$ et la station centrale SC (sol-satellite-sol-satellite-sol). Le message de réservation est ensuite mémorisé dans une file d'attente FIFO du dispositif d'allocation de la station centrale SC pour être traité après un temps d'attente Ta. Ainsi une ressource, c'est-à-dire en pratique un intervalle temporel $IT_i$ d'une sous-trame de données $STD_j$, n'est affectée à la station terrienne $ST_i$ par la station centrale SC qu'à l'expiration d'une durée $T_2$ telle que $T_2 = TR + 2T_t + Ta$.

Le temps de transmission "aller et retour" $2T_t$ et le temps d'attente Ta sont difficilement modifiables puisqu'ils dépendent de caractéristiques intrinsèques du réseau selon la réalisation choisie (capacité, lignes, implantation). Par contre la durée de la rafale TR induit des retards critiques lorsque la rafale ou le message dont elle est issue, a une longue durée (services d'images).

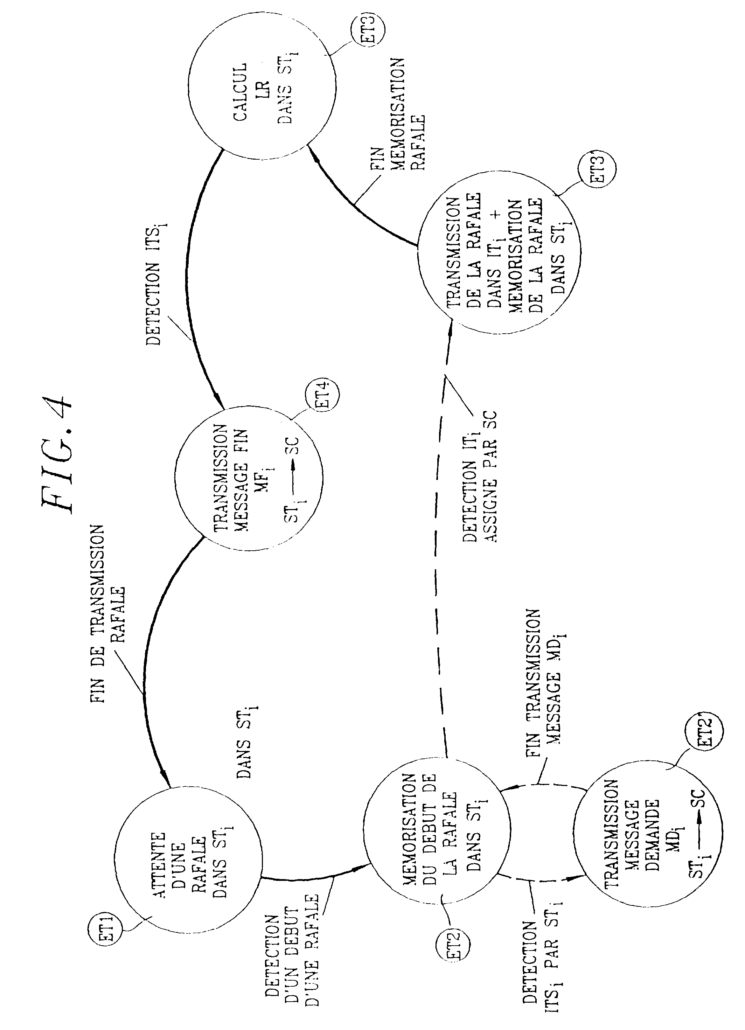

Le procédé selon l'invention vise principalement à réduire les délais d'allocation de ressources, comme indiqué dans le diagramme d'états ET1, ET2-ET2', ET3'-ET3 et ET4 montré à la Fig.4. Initialement dans un premier état ET1, la station terrienne $ST_i$ est en attente d'une rafale. Lors de la détection du début d'une rafale générée durant une connexion établie par la station terrienne $ST_i$, c'est-à-dire d'une première cellule de la rafale, la station terrienne $ST_i$ passe à un second état ET2 pour commencer à mémoriser la rafale. Néanmoins, contrairement au protocole TDMA-Réservation, dans cet état de mémorisation ET2, la station terrienne $ST_i$ est en attente d'un intervalle temporel de signalisation $ITS_i$ qui lui est propre dans les sous-trames de signalisation $STS_r$. Lors de la détection d'un intervalle temporel $ITS_i$ succédant au début de la mémorisation de la rafale, la station terrienne $ST_i$ transmet dans ce dernier un message de demande d'allocation $MD_i$ vers la station centrale SC (état ET2'). Ce message de demande d'allocation $MD_i$ reçu par la station centrale SC est mémorisé dans une mémoire FIFO du dispositif d'allocation de ressources. Tous les messages $MD_1$ à $MD_I$ provenant des stations terriennes $ST_1$ à $ST_I$ et relatifs à des demandes d'allocation de ressource sont ainsi traités selon leur ordre d'arrivée par le dispositif d'allocation; ce dispositif traite tour à tour les différentes demandes d'allocation de ressource mémorisées dans la file d'attente et attribue des ressources, matérialisées par des intervalles temporels périodiques $IT_i$, aux différentes stations terriennes éloignées correspondantes en fonction de la capacité de ressources disponibles.

Ainsi, contrairement au protocole TDMA-Réservation dans lequel un message de réservation $MR_i$ n'est transmis par une station terrienne $ST_i$ que suite à une réception complète d'une rafale, le procédé selon l'invention prévoit une transmission d'un message de demande d'allocation $MD_i$ par la station terrienne $ST_i$ à la station centrale SC dès détection d'un début de rafale.

Après détection d'un intervalle temporel $IT_i$ dans la sous-trame de données assigné à la station terrienne $ST_i$ par la station centrale SC, suite au traitement du message de demande d'allocation $MD_i$, la station terrienne $ST_i$ commence la transmission de la rafale dans l'intervalle $IT_i$. Après mémorisation complète d'une rafale, la station terrienne $ST_i$

effectue à l'état ET3 un calcul de la longueur LR ou durée TR de la rafale mémorisée. Une information concernant la longueur de la rafale est alors transmise par la station terrienne $ST_i$ à la station centrale SC dans un message de fin $MF_i$ après détection d'un intervalle temporel de signalisation $ITS_i$, comme Indiqué à l'état ET4 de la Fig.4. Le message de fin $MF_i$ permet notamment d'informer la station centrale SC sur la longueur de la rafale afin de libérer l'intervalle assigné $IT_i$ Lorsque toute la rafale est transmise par la station terrienne via le satellite.

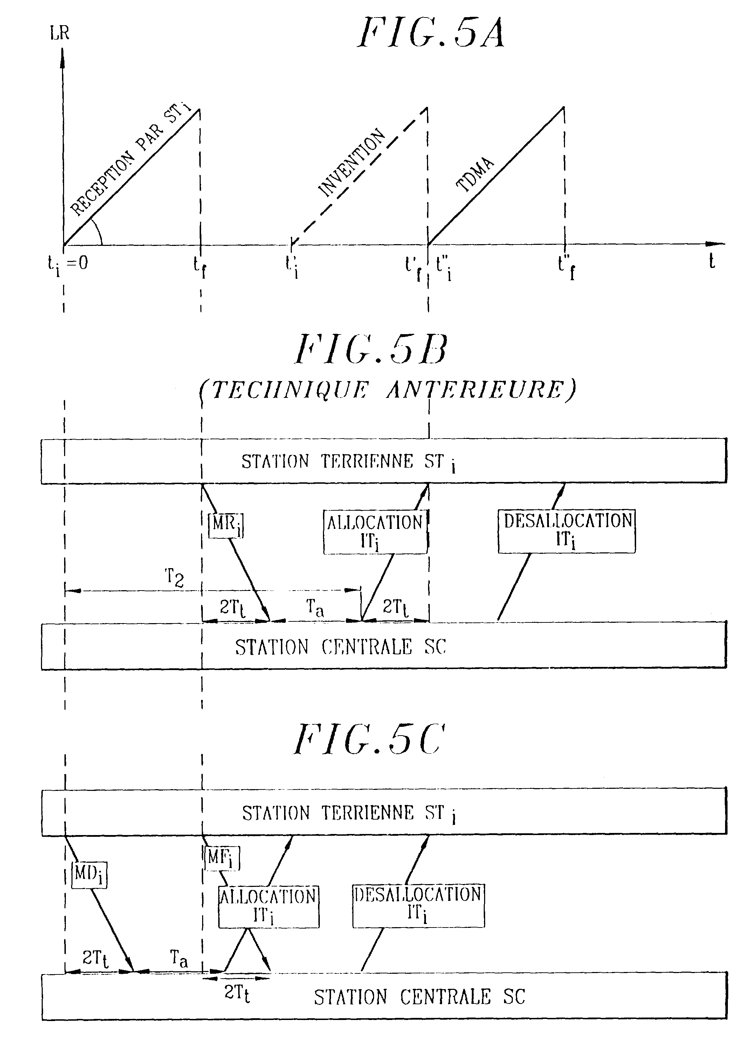

Pour comparer les performances du procédé selon l'invention par rapport au protocole connu TDMA-Réservation, on se réfère aux Figs. 5A, 5B et 5C qui illustrent schématiquement des échanges de signaux au cours d'une communication ou connexion établie entre une station terrienne $ST_i$ et la station centrale SC et consistant en une transmission d'une rafale.

La Fig.5A montre des longueurs LR de rafales transmises en onction du temps t. Des instants initial $t_i$ et final $t_f$ délimitent dans une station terrienne $ST_i$ la mémorisation d'une rafale transmise par une station d'usagers au débit $D_{max}$. Des instants $t'_i$ et $t'_f$ ainsi que des instants $t''_i$ et $t''_f$ délimitent temporellement la transmission de la rafale par la station terrienne $ST_i$ vers une station quelconque du faisceau 3 en utilisant respectivement le procédé selon l'invention et le protocole TDMA-Réservation.

Les Figs.5B et 5C montrent de manière schématique des phases de transmission d'une rafale entre la station terrienne $ST_i$ et la station centrale SC respectivement selon le protocole précité et selon le procédé conforme à l'invention.

Dans la Fig.5B, relative au protocole TDMA-Réservation, la station terrienne $ST_i$ ne transmet un message de réservation $MR_i$ que suite à une mémorisation complète de la rafale selon le mécanisme "store and forward".

Ce message de réservation $MR_i$ reçu par la station centrale SC après un délai de transmission $2T_t$, n'est traité par cette dernière qu'après un temps d'attente Ta correspondant à un temps de traitement du message de réservation $MR_i$ mémorisé dans une file d'attente du dispositif d'allocation de ressources de la station centrale SC. L'allocation de ressources par la station centrale SC se traduit par celle d'un intervalle temporel $IT_i$ dans la sous-trame de données $STD_i$ à la station terrienne $ST_i$ en fonction d'une information de longueur de rafale incluse dans le message de réservation $MR_i$ et précède la transmission de la rafale par la station terrienne pendant un temps $(t''_f - t_i'')$.

Dans la Fig.5C, relative au procédé selon l'invention, un message de demande d'allocation $MD_i$ est transmis par la station terrienne $ST_i$ à la station centrale SC suite à un début de détection de rafale après détection d'un intervalle temporel de signalisation $ITS_j$. Comme il sera vu ultérieurement, un débit $D_{max}^I$ est alors affecté à la station terrienne $ST_i$ par la station centrale SC, également après un temps d'attente Ta. Néanmoins, le message $MD_i$ étant transmis dès réception d'une première cellule de la rafale par la station terrienne $ST_i$, les gains en temps de transmission, notamment pour des rafales de longues durées, sont conséquents.

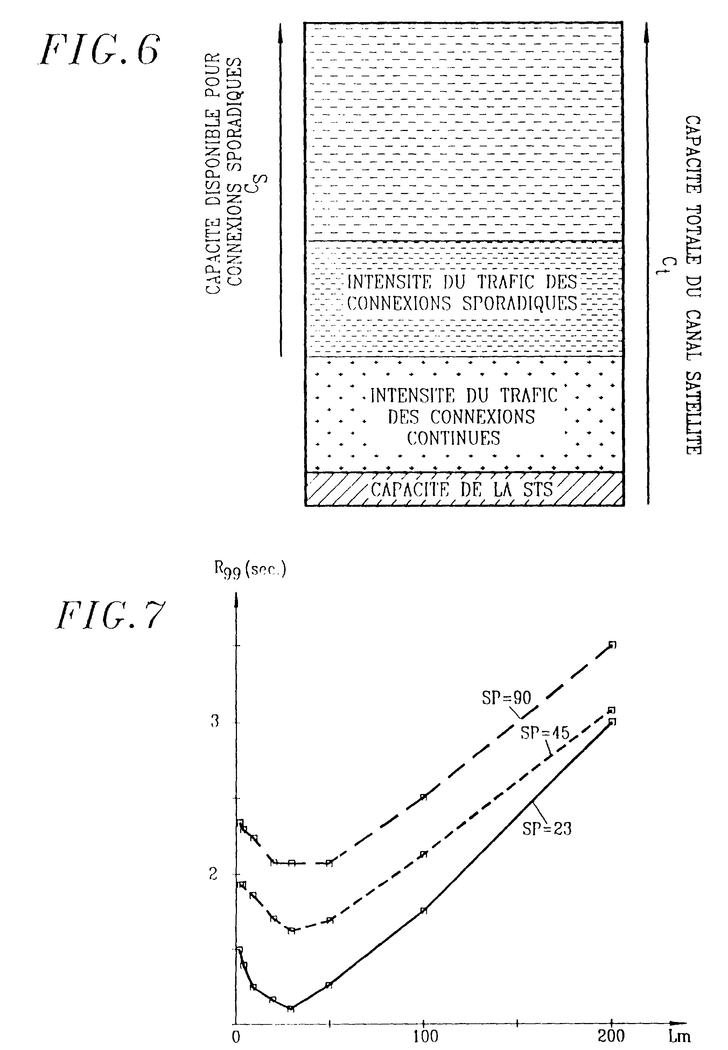

En référence à la Fig.6 qui résume les affectations de capacités de charge de trafic dans le canal satellite, une partie de la capacité totale $C_t$ du canal satellite est affectée à la sous-trame de signalisation STS, tandis que deux autres parties sont respectivement affectées aux connexions continues et aux connexions sporadiques établies entre stations terriennes des faisceaux A et B et sont incluses dans la sous-trame de données STD. La partie utile affectée aux connexions sporadiques est très variable, tandis que la partie affectée aux connexions continues, c'est-à-dire ayant des débits constants, varie plus lentement. En effet, l'intervalle de temps $IT_i$ alloué à une connexion continue suite à une seule demande de connexion-allocation a une longueur constante et est périodique.

La première partie de la description montrant le principe du procédé selon l'invention comparativement au protocole TDMA-Réservation établit clairement que toute demande d'allocation de ressource pour chaque rafale transmise par une station terrienne $ST_i$ doit être satisfaite puisqu'aucune information concernant la capacité nécessaire pour une rafale reçue n'est transmise lors d'une demande d'allocation. Dans ce cas là, toute connexion pour une transmission de rafales ne peut être acceptée sans un risque de surcharge du réseau et d'effondrement des performances de ce dernier. Il est alors nécessaire d'établir un algorithme d'élaboration de refus/acceptation des connexions ou communications. Cet algorithme est maintenant introduit dans cette seconde partie de la description.

Du point de vue du trafic sporadique, on supposera qu'à un instant donné, I stations terriennes $ST_1$ à $ST_I$ du faisceau ont établi chacune une connexion $COM_1$ à $COM_I$, bien qu'en pratique une station terrienne établit plusieurs connexions respectivement pour plusieurs terminaux d'une station d'usagers qui lui est rattachée. La configuration du réseau est entièrement définie par I groupes de trois paramètres relatifs respectivement aux I connexions $COM_1$ à $COM_I$ établies entre les faisceaux A et B et par un paramètre global du réseau qui est la capacité totale disponible affectée aux connexions sporadiques $C_S$. Les trois paramètres respectifs relatifs à chacune $COM_i$ des connexions établies sont :

- la longueur moyenne $Lm_i$ des rafales générées respectivement par la station terrienne $ST_i$ au cours d'une connexion, la longueur étant exprimée en nombre de cellules,
- la sporadicité $SP_i$ des rafales de la connexion, et
- le rapport de charge $RA_i$ entre la capacité disponible $C_S$ et le débit maximum $D_{max}^I$ généré par chaque station, la capacité étant exprimée en bit/s.

Toutes les courbes présentées dans les Figs.7, 8 et 9 ont été obtenues par simulation du comportement d'un réseau satellite numérique à intégration de services utilisant la technique temporelle asynchrone (ATM). L'outil de simulation est un ordinateur programmé en langage SIMSCRIPT. Il est notamment supposé dans la simulation réalisée que la sous-trame de signalisation STS représente au minimum 5% de la trame totale de durée 30 ms et que le délai de transmission sol-satellite-sol est de 300 ms. Les performances du réseau de ressource utilisant le mode d'allocation de ressource caractérisant l'invention et présenté dans la première partie de la description, sont mesurées en terme de retard (en secondes) entre le début de réception d'une rafale par une station terrienne donnée et la retransmission de la rafale reçue vers une station quelconque du faisceau B. Dans cette étude, les trois paramètres définis précédemment caractérisant des connexions établies respectivement entre les différentes stations terriennes $ST_i$ du faisceau A et des stations du faisceau B sont supposés identiques; il s'agit d'une configuration homogène de connexions. Ainsi les connexions "simulées" entre les diverses stations sont caractérisées par des longueurs moyennes de rafale Lm, des sporadicités SP et des rapports de charge RA respectivement identiques. L'action de chacun des paramètres sur la performance du réseau en terme de retard, est ainsi étudiée.

Dans la Fig.7 est montré l'influence de la longueur moyenne Lm des rafales, supposée identique pour chacune des connexions établies entre les stations terriennes $ST_i$ du faisceau A et des stations du faisceau B via la station centrale SC, sur le retard de transmission $R_{99}$, exprimé en secondes. Ce retard de transmission $R_{99}$ doit être perçu comme une donnée statistique moyenne et plus précisément doit être analysé comme une probabilité à 99% d'obtenir un retard réel inférieur à $R_{99}$.

Dans la Fig.7, le rapport de charge $C_S/D_{max}$ est supposé égal à 4, et différentes courbes sont réprésentées pour des sporadicités respectivement égales à 23, 45 et 90. Pour des rafales courtes (inférieures à 50 cellules), l'augmentation de la longueur moyenne Lm des rafales entraîne une diminution du retard de transmission $R_{99}$. Ce phénomène est en accord avec le principe d'allocation de ressource selon l'invention. En effet, pour des rafales courtes transmises par les diverses stations terriennes $ST_i$ durant des connexions respectives, les retards de transmission des messages de fin de mémorisation $MF_i$ transmis vers la station centrale SC et contenant une information relative à la durée d'allocation de ressources pour le dispositif d'allocation de ressources dans la station centrale SC, sont d'autant plus conséquents que les rafales sont courtes. Une partie des ressources du canal satellite est alors affectée à une station terrienne pendant un temps relativement long comparativement à une transmission effective de rafales. Mis à part ce phénomène, pour des rafales supérieures à 50 cellules, une augmentation de la longueur moyenne des rafales entraîne une augmentation du retard de transmission $R_{99}$.

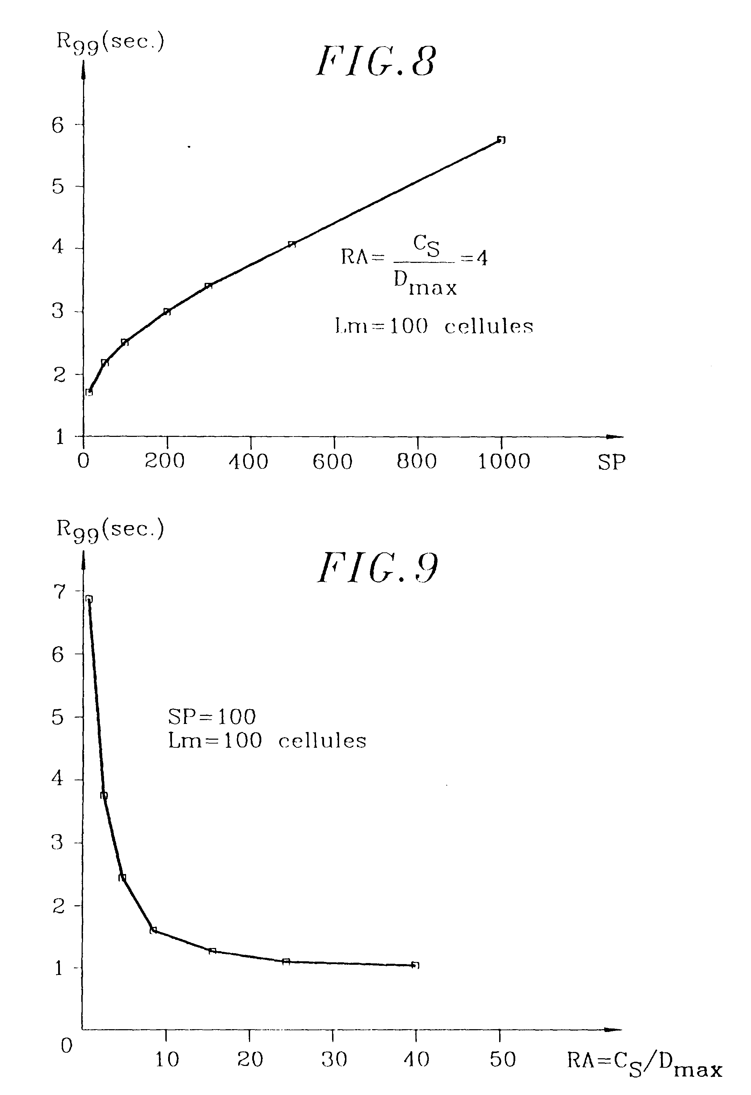

La Fig.8 illustre l'effet de la sporadicité des connexions établies entre les diverses stations terriennes du premier faisceau A et des stations du faisceau B via la station centrale SC sur le retard de transmission $R_{99}$.

La courbe montrée à la Fig.8 a été obtenue également par simulation d'une configuration homogène dans laquelle les trois paramètres définissant chaque connexion sont identiques. Il est à noter qu'une augmentation de la sporadicité des connexions entraîne une augmentation du retard $R_{99}$.

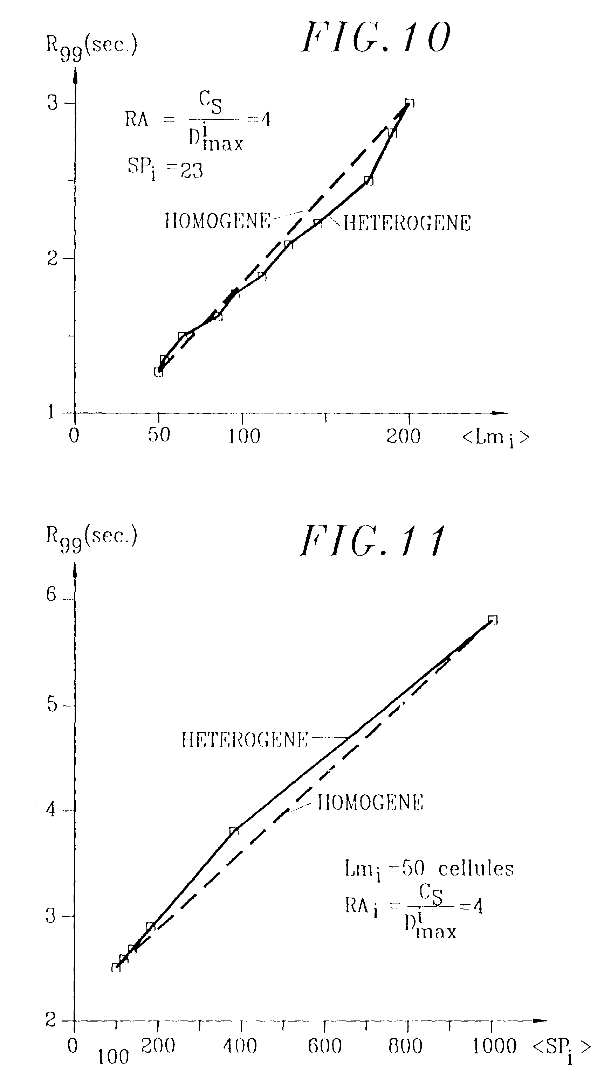

La Fig.9 montre l'effet de l'augmentation du rapport de charge $C_S/D_{max}$ sur le retard de transmission $R_{99}$. La performance du procédé selon l'invention est améliorée lorsque la capacité disponible $C_S$ pour les connexions sporadiques $C_S$ augmente par rapport au débit maximal $D_{max}^j$ des connexions sporadiques.

L'étude des performances d'une configuration "homogène" telle que décrite en référence aux Figs. 7, 8 et 9 est trop éloignée des conditions d'exploitation réelles pour concevoir l'implantation définitive du procédé selon l'invention dans le cadre d'un réseau numérique à intégration de services à large-bande dans lequel coexistent de nombreux services numériques caractérisés par des connexions n'ayant pas des valeurs de paramètres identiques (Sporadicité, Longueur moyenne des rafales, Rapport d'allocation). Une étude plus générale s'impose pour en déduire une implantation du procédé pour une élaboration d'un refus ou d'une acceptation d'une connexion. Les connexions sont étudiées dans le cadre de connexions hétérogènes coexistant dans le réseau et caractérisées par des paramètres pouvant prendre des valeurs différentes. L'étude de cette configuration hétérogène ne doit pas porter simultanément sur les trois paramètres caractérisant les diverses connexions établies entre stations terriennes du faisceau A et stations du faisceau B. Il est nécessaire d'étudier chacun des paramètres séparément pour déduire l'effet de l'hétérogénéité sur chacun d'eux.

Les valeurs possibles des divers paramètres caractérisant la présente simulation concernent les trois paramètres précités.

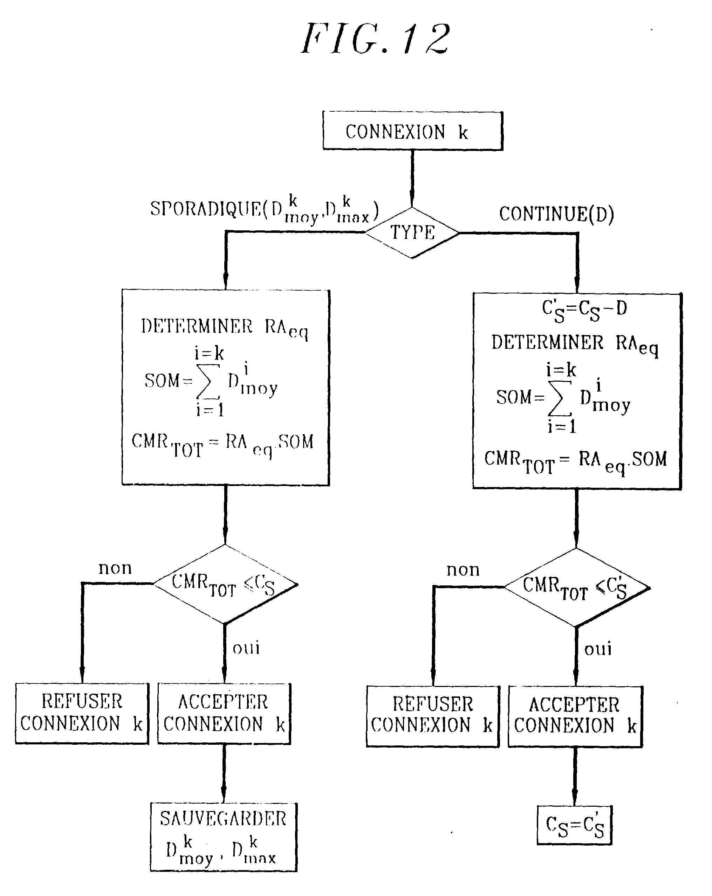

Les Figs.10 et 11 contribuent à étudier respectivement l'effet de l'hétérogénéité sur deux paramètres, longueur moyenne des rafales $Lm_i$ et sporadicité $SP_i$, les deux autres paramètres respectif RA et SP, ou Lm et RA, étant supposés homogènes.

La Fig.10 est relative à une simulation de k connexions établies respectivement par les stations terriennes via la station centrale SC, k étant par exemple égal à 50. Dans cette simulation, il est supposé que les connexions entre stations terriennes du faisceau A et stations du faisceau B sont de deux types, représentatives de services numériques de télécommunications respectifs. Toutes les communications ont une même sporadicité $SP_i$ égale à 23 et un même rapport d'allocation $RA_i = C_S/D_{max}^j$ égal à 4.

Les connexions "simulées" sont seulement différenciées par des valeurs différentes, au nombre de deux, de leur longueur moyenne de rafale respective $Lm_i$. Les deux valeurs possibles des longueurs de rafales sont égales à 50 et 200 cellules à des fins de simplification de simulation. L'axe des abcisses de la Fig.10 est relatif à la moyenne arithmétique des longueurs de rafales des I connexions respectives. Une première courbe en trait continu montre le retard $R_{99}$ de transmission des communications en fonction de la moyenne arithmétique

$$<\mathrm{Lm_i}> = (\sum_{i=1}^{k} \mathrm{Lm_i})/\mathrm{k}$$

des longueurs de rafales des I connexions respectives. Une première courbe en trait continu montre le retard $R_{99}$ de transmission des communications en fonction de la moyenne arithmétique $<Lm_i>$ des longueurs des rafales respectives des k connexions. Les k connexions sont ainsi simulées avec des longueurs de rafales égales à 50, et 200 cellules, ce qui correspond à une moyenne arithmétique variant entre une moyenne minimale pour laquelle toutes les connexions sont constituées de rafales égales à 50 cellules, et une moyenne maximale pour laquelle toutes les connexions sont caractérisées par des longueurs de rafales égales à 200 cellules. Une courbe en trait discontinu est obtenue par une simulation de k connexions pour lesquelles les longueurs moyennes des rafales $Lm_i$ respectives sont identiques et égales à la moyenne des longueurs moyennes $\langle Lm_i \rangle$ des rafales pour les k connexions dans le modèle hétérogène.

Dans la Fig. 10 les deux courbes obtenues pour les deux simulations sont très voisines, ce qui signifie que pour le procédé d'allocation de ressource selon l'invention, k connexions générant des longueurs de rafales différentes $Lm_i$ sont équivalentes à k connexions ayant des longueurs de rafales identiques $L_{eq}$ égales à la moyenne des longueurs de rafales différentes $Lm_i$. Ceci se traduit par l'équation suivante :

$$\mathrm{L_{eq}} = (\sum_{i=1}^{k} \mathrm{Lm_i})/\mathrm{k} \qquad (\mathrm{eq.1})$$

La Fig.11 est relative à une simulation de k connexions établies respectivement par k stations terriennes $ST_i$ via la station centrale SC. Pour chaque connexion "simulée", la longueur des rafales générées $Lm_i$ est égale à 50 cellules, et le rapport de charge $RA_i = C_S/D^i_{max}$ est égal à 4.

Seule les valeurs de sporadicité varient d'une connexion établie à l'autre. A des fins de simplification de simulation, le nombre des valeurs possibles de sporadicité est limité à deux : 100 et 1000. L'axe des abscisses de la Fig.11 est relatif à la moyenne arithmétique des valeurs de sporadicité $<SP_i>$ des k connexions, et l'axe des ordonnées est relatif au retard de transmission $R_{99}$ en secondes.

Une première courbe en trait continu montre le retard $R_{99}$ de transmission des connexions en fonction de la moyenne arithmétique $<SP_i>$ des valeurs de sporadicité des k connexions, qui varie entre une moyenne arithmétique minimale pour laquelle toutes les connexions ont des valeurs de sporadicité égales à 100, et une moyenne arithmétique maximale pour laquelle les valeurs de sporadicité des k connexions sont égales à 1 000. Une courbe en trait discontinu est obtenue par une simulation de k connexions homogènes entre stations terriennes $ST_i$ du faisceau A et des stations du faisceau B via la station centrale SC pour lesquelles les valeurs de sporadicité respectives sont identiques et égales à :

$$\mathrm{SP_{eq}} = \mathrm{k} \ /\sum_{i=1}^{k}(1/\mathrm{SP_i}) \qquad (\mathrm{eq.2})$$

Selon la Fig. 11, les deux courbes obtenues pour les deux simulations sont quasi-identiques ce qui signifie que selon le procédé, k connexions ayant des valeurs de sporadicité $SP_i$ différentes sont équivalentes à k connexions ayant des valeurs de sporadicité égales à $SP_{eq}$.

S'agissant du troisième paramètre, le rapport de charge $RA_i = C_S/D^i_{max}$ peut être déterminé au moyen d'une équation d'équivalence entre k connexions ayant des rapports de charge $RA_i$ différents (configuration hétérogène en rapport de charge) et k connexions ayant des rapports de charge égaux (configuration homogène), notés $RA_{eq}$. Cette équation a la forme suivante :

$$RA_{eq} = F(RA_i \text{ pour les connexions COM}_i \text{ en cours}) \qquad (\mathrm{eq.3})$$

Les équations précédentes (eq.1), (eq.2) et (eq.3) respectivement déduites des études des trois paramètres, longueur de rafale, sporadicité et rapport de charge, permettent de concevoir un algorithme de contrôle de charge pour l'implantation définitive du procédé selon l'invention, fondé sur les propriétés d'équivalence entre configuration homogène de connexions et configuration hétérogène de connexions, et établissant l'élaboration d'un refus ou d'une acceptation d'une connexion.

Il a été vu précédemment qu'une connexion établie par l'une quelconque des stations terriennes $ST_i$ est définie par trois paramètres, à savoir la longueur des rafales générées $Lm_i$, la sporadicité $SP_i$ et le rapport de charge $RA_i = C_S/D^i_{max}$. Pour une $k^{ième}$ demande de connexion $DC_i$ par l'une quelconque des stations terriennes $ST_i$, est définie une variable appelée "capacité minimale requise totale" $CMR_{TOT}$ qui permet d'évaluer si ladite demande de connexion $DC_i$ doit être acceptée ou refusée par la station centrale SC. Une valeur de la variable $CMR_{TOT}$ pour la $k^{ième}$ connexion dépend des 3 paramètres respectifs des (k-1) connexions déjà établies ainsi que des trois paramètres de la $k^{ième}$ connexion. Ceci se traduit par l'équation :

$$CMR_{TOT} = f(Lm_1,...Lm_k; ..., SP_1,... SP_k; C_S/D^l_{max} , ... C_S/D^k_{max} )$$

dans laquelle les paramètres entre parenthèses désignent les trois paramètres pour les k connexions établies ou à établir par des stations terriennes choisies arbitrairement.

Les considérations d'équivalence déduites des équations (eq.1) et (eq.2) permettent d'écrire l'équation précédente sous la forme :

$$CMR_{TOT} = g(L_{eq}, SP_{eq}, C_S/D^l_{max} ....., C_S/D^k_{max} )$$

Des données statistiques moyennes établissent que les valeurs équivalentes $L_{eq}$ et $SP_{eq}$ sont respectivement toujours inférieures à des limites supérieures $L_{sup}$ et $SP_{sup}$, ces limites étant toujours supérieures aux longueurs moyennes $Lm_i$ et sporadicités $SP_i$ quelle que soit la configuration du trafic du réseau.

Ainsi l'équation s'écrit

$$CMR_{TOT} = g(L_{sup}, SP_{sup}, C_S/D^l_{max} ,... C_S/D^k_{max} )$$

Les valeurs $L_{sup}$ et $SP_{sup}$ étant par hypothèse constantes, l'équation peut encore se simplifier sous la forme :

$$CMR_{TOT} = h(C_S/D^l_{max} ,... C_S/D^k_{max} )$$

La propriété d'équivalence entre configuration hétérogène en rapport de charge et configuration homogène en rapport de charge $RA_i = C_S/D^i_{max}$, représentée mathématiquement par l'équation (eq.3), contribue à simplifier la fonction h déterminant la capacité minimale requise totale $CMR_{TOT}$ donnée ci-dessus.

En effet, selon l'équation (eq.3), k connexions ayant des rapports de charge différents $RA_1 = C_S/D^l_{max}$, à $RA_k = C_S/D^k_{max}$ sont équivalentes à k connexions ayant des rapports de charge identiques et égaux à $RA_{eq}$.

Pour établir la relation entre le rapport de charge $RA_{eq}$ et la capacité minimale requise totale $CMR_{TOT}$, les longueurs de rafale et les sporadicités sont supposées constantes et respectivement égales à $L_{sup}$ et $SP_{sup}$. Cette relation est obtenue comme décrit ci-après.

Seuls des paramètres $D^k_{max}$ et $D^k_{moy}$ doivent être fournis dans un message de demande de connexion $DC_k$ pour une $k^{ième}$ connexion donnée à établir $COM_k$ par l'une quelconque des stations terriennes. Pour la $k^{ième}$ connexion à établir, l'équation (eq.3) est utilisée, et les valeurs équivalentes des sporadicités et des longueurs moyennes de rafales des connexions sont supposées respectivement égales à $SP_{eq}$ et $L_{eq}$, afin de déduire, en fonction des débits maximums des (k-1) connexions en cours et de la nouvelle $k^{ième}$ connexion à établir, un rapport de charge équivalent $RA_{eq}$ pour les k connexions. A partir de ce résultat, l'algorithme selon l'invention présenté ci-après prévoit le calcul d'une somme SOM des débits moyens $D^l_{moy}$ des connexions transmis dans les k demandes de connexion $DC_i$ respectives. Le rapport de charge équivalent $RA_{eq}$ (configuration homogène en rapport de charge) est alors multiplié par la somme des débits moyens

$$SOM = \sum_{i=1}^{k} D'_{moy}$$

afin d'obtenir la capacité minimale requise totale $CMR_{TOT}$. La $k^{\text{ième}}$ connexion donnée est acceptée si cette capacité minimale requise totale $CMR_{TOT}$ est inférieure à la capacité totale disponible pour connexions sporadiques $C_S$ sinon elle est refusée.

L'algorithme pour l'implantation du procédé selon l'invention est maintenant présenté plus précisément en référence à la Fig.12.

Un automate d'élaboration d'acceptation/refus de connexion dans la station centrale SC reconnaît une demande de connexion $DC_k$ pour une $k^{\text{ième}}$ connexion donnée à caractère sporadique en cours d'établissement. Cet automate utilise alors le débit maximum $D^k_{max}$ transmis dans la demande de connexion $DC_k$ et les débits maximums des connexions en cours préalablement mémorisés pour déduire un rapport de charge équivalent $RA_{eq}$ relatif à toutes les connexions, conformément à l'équation (eq.3).

L'automate effectue ensuite la somme du débit moyen $D^k_{moy}$ transmis dans la demande de connexion $DC_k$ et des débits moyens préalablement mémorisés des (k-1) connexions en cours pour obtenir SOM.

La somme obtenue SOM est multipliée par le rapport de charge équivalent $RA_{eq}$. Le résultat de la multiplication $CMR_{TOT}$ est comparé avec la capacité totale disponible pour les connexions sporadiques $C_S$. La connexion est acceptée si et seulement si cette capacité $C_S$ est supérieure à la capacité minimale requise totale $CMR_{TOT}$.

Dans le cas d'une connexion à caractère continu, la capacité requise pour celle-ci influence dynamiquement la capacité disponible $C_S$ relative aux connexions à caractère sporadique.

Selon l'algorithme, à droite dans la Fig. 12, pour une nouvelle demande de connexion donnée à caractère continu de débit D à établir, une nouvelle capacité disponible relative aux connexions sporadiques $C'_S$ est déduite par soustraction du débit D à la capacité disponible $C_S$ précédant la demande de la nouvelle connexion donnée. La capacité minimale requise totale $CMR_{TOT}$, pour les commmunications sporadiques établies est calculée comme précédemment et comparée à la nouvelle capacité disponible $C'_S$. Si cette nouvelle capacité $C'_S$ est supérieure à la capacité $CMR_{TOT}$, la connexion est acceptée, sinon elle est refusée. Ainsi, dans le cas d'une demande de connexion à caractère continu, la connexion est acceptée si cette dernière n'affecte pas la capacité totale requise pour les connexions sporadiques en cours, de telle sorte que celles-ci soient interrompues.

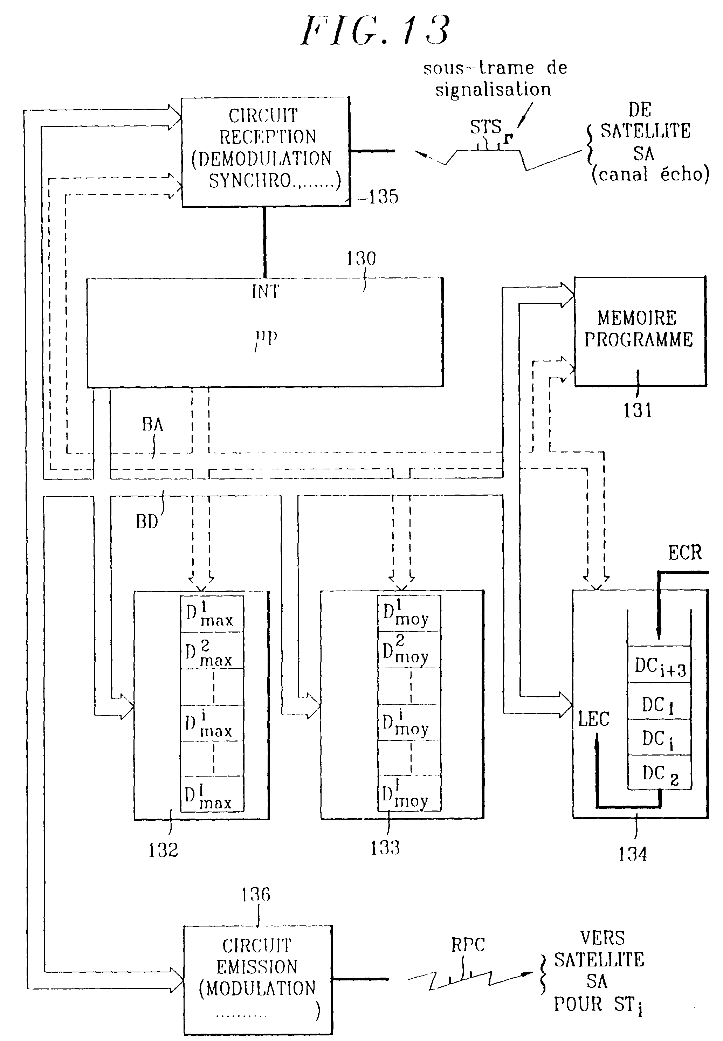

Un schéma de l'automate d'élaboration d'un refus/acceptation d'une connexion dans la station centrale SC pour une implantation de l'algorithme précité, est montré à la Fig.13. Le circuit comprend un microprocesseur 130, une mémoire ROM de programme 131, une mémoire des débits maximums $D^l_{max}$ des connexions en cours 132, une mémoire des débits moyens $D^l_{moy}$ des connexions en cours 133, une file FIFO 134, un circuit de réception 135 et un circuit d'émission 136. La mémoire de programme 131 mémorise un programme en langage de bas niveau correspondant à l'algorithme montré à la Fig.12.

Les mémoires 131, 132, 133 et 134, et le microprocesseur 130 sont reliés au moyen d'un bus d'adresse BA et d'un bus de données BD.

La sous-trame de signalisation $STS_r$ convoyant les messages de demande de connexion $DC_i$ retransmise en un canal écho vers le faisceau A est reçue et décodée par le circuit de réception 135 pour être appliquée au microprocesseur 130. Le circuit de réception 135 assure notamment des fonctions de démodulation, décodage et synchronisation. Lorsqu'une connexion est acceptée, suite à un calcul effectué par le microprocesseur selon l'algorithme présente à la Fig. 12 notamment en lisant les débits maximums dans la mémoire 132 pour déduire un rapport de charge équivalent $RA_{eq}$, et en lisant les débits moyens dans la mémoire 133 pour calculer la capacité minimale requise totale $CMR_{TOT}$ à partir de $RA_{eq}$, le dispositif d'allocation de ressource tel que présenté dans la première partie de la description est utilisé pour chaque rafale de cette connexion, sans être affecté par les autres demandes de connexion en cours.

## Revendications

1. Procédé d'allocation de ressources à des stations terriennes ($ST_i$) par une station centrale (SC) dans un réseau de télécommunications temporel asynchrone par satellite (SA), les stations terriennes recevant des rafales de cellules de données transmises par des stations d'usagers ($SU_i$) au cours de connexions sporadiques respectives, lesdites rafales étant transmises dans une sous-trame de données ($STD_r$) d'une trame périodique ($T_r$) à accès multiple à répartition dans le temps (AMRT), une connexion sporadique ($COM_i$) étant définie par une longueur moyenne (Lm) des rafales à transmettre au cours de ladite connexion, une sporadicité et un débit maximum $D^l_{max}$ une station terrienne ($ST_i$) ayant reçu complètement une rafale transmettant un message de fin ($MR_i$, $MF_i$) qui inclut la longueur de la rafale, dans une sous-trame de signalisation ($STS_r$) de la trame périodique ($T_r$) vers la station centrale (SC) afin de libérer une ressource allouée à la rafale dans la sous-trame de données ($STD_r$) lorsque toute la rafale est transmise par la station terrienne, caractérisé par

   - la décision d'une acceptation ou d'un refus d'une nouvelle connexion sporadique donnée à établir ($COM_k$) suite à une demande de connexion sporadique ($DC_k$) dans la sous-trame de signalisation ($STS_r$) par une

station terrienne (ST$_i$), ladite décision étant déterminée en fonction d'un algorithme dans lequel les longueurs moyennes des rafales et sporadicités sont considérées comme des constantes prédéterminées (L$_{eq}$, SP$_{eq}$) et qui dépend de débits binaires maximums et de débits binaires moyens des connexions en cours et de ladite connexion donnée, le débit binaire maximum $D_{max}^k$ et ledit débit binaire moyen $D_{moy}^k$ relatifs à ladite connexion sporadique donnée étant inclus dans ladite demande de connexion (DC$_k$),

- suite à l'acceptation de la demande de connexion sporadique, la transmission d'une demande d'allocation de ressource (MD$_i$) dans la sous-trame de signalisation (STS$_r$) par la station terrienne (ST$_i$) vers la station centrale (SC) en réponse au début de la réception et de la mémorisation de chacune des rafales de la connexion donnée dans la station terrienne, et

- la réservation anticipée d'une ressource sous la forme d'un intervalle temporel (IT$_i$) dans la sous-trame de données (STD$_r$) à la rafale par la station centrale dès qu'un intervalle de temps de la sous-trame de données est libéré afin que la station terrienne puisse commencer à transmettre la rafale tout en continuant à mémoriser la rafale.

2. Procédé conforme à la revendication 1, caractérisé en ce que ledit algorithme consiste, pour ladite demande de connexion sporadique (DC$_k$), à calculer un rapport de charge équivalent (RA$_{eq}$) pour les connexions sporadiques en cours ainsi que pour ladite connexion donnée (COM$_k$) en fonction notamment desdites constantes et des débits binaires maximums des connexions sporadiques $D_{max}^l$ à calculer la somme (SOM) des débits moyens $D_{max}^l$ des connexions sporadiques, à calculer le produit (CMR$_{TOT}$) de ladite somme (SOM) par ledit rapport de charge équivalent (RA$_{eq}$), et à accepter la demande de connexion (DC$_k$) lorsque ledit produit (CMR$_{TOT}$) est inférieur à une capacité totale disponible pour les connexions sporadiques (C$_S$).

3. Procédé conforme à la revendication 2, dans lequel des connexions à débits constants (D) sont établies par les stations terriennes à travers ledit réseau, caractérisé en ce que ledit algorithme pour une demande de connexion à débit constant consiste à soustraire le débit constant (D) à la capacité totale disponible (C$_S$) pour établir une seconde capacité disponible (C'$_S$) pour les connexions sporadiques, à calculer ledit produit (CMR$_{TOT}$) pour des connexions sporadiques en cours, et à accepter la demande de connexion à débit constant lorsque ledit produit (CMR$_{TOT}$) est inférieur à la seconde capacité disponible (C'$_S$).

4. Procédé conforme à l'une quelconque des revendications 1 à 3, caractérisé en ce que lesdites constantes prédéterminées (L$_{eq}$, SP$_{eq}$) sont respectivement égales à des limites supérieures (L$_{sup}$, SP$_{sup}$) des longueurs moyennes des rafales (Lm$_i$) et des sporadicités (SP$_i$) de toutes les connexions.

**Patentansprüche**

1. Verfahren zur Zuweisung von Mitteln an Bodenstationen (ST$_i$) durch eine zentralstation (SC) in einem asynchronen Zeitsatellitenkommunikationsnetzwerk (SA), wobei die Bodenstationen Zellenbündel von durch Verbraucherstationen (SU$_i$) während der jeweiligen sporadischen Verbindungen übertragenen Daten erhalten, die Bündel in einem Daten-Subrahmen (STD$_r$) eines periodischen Rahmens (T$_r$) mit Zeitvieltachzugriff (AMRT) übertragen werden, eine sporadische Verbindung (COM$_i$) durch eine mittlere Länge (Lm) der während der Verbindung zu übertragenden Bündel durch eine Sporadizität und eine Maximalübertragungsrate (D'$_{max}$) definiert wird, wobei eine Bodenstation (ST$_i$), die ein Bündel vollständig erhalten hat, eine die Länge des Bündels einschließende Endemeldung (MR$_i$, MF$_i$), in einem Signal-Subrahmen (STS$_r$) des periodischen Rahmens (T$_r$) in Richtung der Zentralstation (SC) überträgt, damit ein dem Bündel in dem Daten-Subrahmen (STD$_r$) zugewiesenes Mittel freigegeben wird, wenn das ganze Bündel durch die Bodenstation übertragen wird, gekennzeichnet, durch

- die Entscheidung, durch eine Bodenstation (ST$_i$) aufgrund einer Antorderung nach sporadischer Verbindung (DC$_k$) in dem Signal-Subrahmen (STS$_r$) eine neue vorgegebene sporadische Verbindung (COM$_k$) anzunehmen oder abzulehnen, wobei in Abhängigkeit von einem Algorithmus entschieden wird, in welchem die mittleren Längen der Bündel und der Sporadizitäten als vorgegebene Konstanten gesehen werden (L$_{eq}$, SP$_{eq}$) und welcher von den Maximal- und mittleren Übertragungsraten der laufenden Verbindungen und von der vorgegebenen verbindung abhängt, wobei die Maximalübertragungsrate (D$^K_{max}$) und die mittlere Übertragungsrate (D$^K_{moy}$) bezüglich der sporadischen vorgegebenen Verbindung in der Verbindungsantorderung (DC$_k$) eingeschlossen sind,

- bei der Annahme der Anforderung nach sporadischer Verbindung die übertragung eine Antorderung nach Zuweisung von Mitteln (MD$_i$) in dem Signal-Subrahmen (STS$_r$) durch die Bodenstation (ST$_i$) zur Zentralstation (SC) als Antwort auf den Anfang des Empfangs und der Speicherung jedes Bündels der vorgegebenen Verbindung in der Bodenstation, und

- die verfrühte Reservierung eines Mittels in der Form eines Zeitintervalls ($IT_i$) in dem Daten-Subrahmen ($STD_r$) zum Bündel durch die Zentralstation, sobald ein Zeitintervall des Daten-Subrahmens freigegeben wird, damit die Bodenstation anfangen kann, das Bündel zu übertragen und dabei das Bündel weiterspeichert.

**2.** Verfahren nach Anspruch 1, dadurch gekennzeichnet, daß der Algorithmus darin besteht, für die Anforderung nach sporadischer Verbindung ($DC_k$) ein entsprechendes Belastungsverhältnis ($RA_{eq}$) für die sporadischen laufenden Verbindungen zu errechnen, sowie für die vorgegebene Verbindung ($COM_k$) in Abhängigkeit u.a. von den Konstanten und den Maximalübertragungsraten der sporadischen Verbindungen ($D'_{max}$) die Summe ($SOM$) der mittleren übertragungsraten ($D'moy$) der sporadischen Verbindungen zu errechnen, das Produkt ($CMR_{TOT}$) aus der Summe ($SOM$) mal das entsprechende Belastungsverhältnis ($RAeq$) zu errechnen und die Anforderung nach Verbindung ($DC_k$) anzunehmen, wenn das Produkt $CMR_{TOT}$) kleiner als eine für die sporadischen Verbindungen verfügbare Gesamtkapazität ($C_S$) ist.

**3.** Verfahren nach Anspruch 2, bei welchem Verbindungen mit konstanten übertragungsraten (D) durch die Bodenstationen durch das Netz erteilt werden, dadurch gekennzeichnet, daß der Algorithmus für eine Anforderung nach Verbindung mit konstanter Übertragungsrate darin besteht, die konstante übertragungsrate (D) der verfügbaren Gesamtkapazität ($C_S$) zu entziehen, um eine zweite verfügbare Kapazität ($C'_S$) für die sporadischen Verbindungen zu erstellen, das Produkt ($CMR_{TOT}$) für sporadische laufende Verbindungen zu errechnen, und die Anforderung nach Verbindung mit konstanter übertragungsrate anzunehmen, wenn das Produkt ($CMR_{TOT}$) kleiner als die zweite verfügbare Kapazität ($C'_S$) ist.

**4.** Verfahren nach einem der Ansprüche 1 bis 3, dadurch gekennzeichnet, daß die vorgegebenen Konstanten ($L_{eq}$, $SP_{eq}$) jeweils oberen Grenzen ($L_{sup}$, $SP_{sup}$) der mittleren Längen der Bündel ($Lm_i$) und der Sporadizitäten ($SP_i$) aller Verbindungen gleich sind.

**Claims**

**1.** Method for allocating resources to earth stations ($ST_i$) by a central station (SC) in a satellite asynchronous time-division telecommunication network (SA), the earth stations receiving bursts of data cells transmitted by user stations ($SU_i$) during respective sporadic connections, said bursts being transmitted in a data sub-frame ($STD_r$) of a time-division multiple access (TDMA) periodic frame ($T_r$), a sporadic connection ($COM_i$) being defined by an average length (Lm) of the bursts to be transmitted during said connection, a sporadicness and a maximum bit rate ($D^i_{max}$), an earth station ($ST_i$) having completely received a burst transmitting an end message ($MR_i$, $MF_i$) which includes the length of the burst, in a signalling sub-frame ($STS_r$) of the periodic frame ($T_r$) to the central station (SC) so as to release a resource allocated to the burst in the data sub-frame ($STD_r$) when the whole burst is transmitted by the earth station, characterized by

- the decision to accept or refuse a new given sporadic connection to be set up ($COM_k$) subsequent to a sporadic connection request ($DC_k$) in the signalling sub-frame ($STS_r$) by an earth station ($ST_i$), said decision being determined as a function of an algorithm in which the average lengths of the bursts and sporadicnesses are considered as predetermined constants ($L_{eq}$, $SP_{eq}$) and which depends on maximum bit rates and average bit rates of the connections in process and of said given connection, the maximum bit rate ($D^k_{max}$) and said average bit rate ($D^k_{moy}$) relating to said given sporadic connection being included in said connection request ($DC_k$),
- subsequent to acceptance of the sporadic connection request, the transmission of a resource allocation request ($MD_i$) in the signalling sub-frame ($STS_r$) from the earth station ($ST_i$) to the central station (SC) in response to the beginning of the reception and of the storing of each of the bursts of the given connection in the earth station, and
- the anticipated reservation of a resource in the form of a time interval ($IT_i$) in the data sub-frame ($STD_r$) for the burst by the central station as soon as a time interval of the data sub-frame is released so that the earth station can begin transmitting the burst while continuing to store the burst.

**2.** Method according to claim 1, characterized in that said algorithm consists, for said sporadic connection request ($DC_k$), in computing an equivalent load ratio ($RA_{eq}$) for the sporadic connections in process and for said given connection ($COM_k$) as a function notably of said constants and of the maximum bit rates of the sporadic connections ($D^i_{max}$), in computing the sum (SOM) of the average bit rates ($D^i_{moy}$) of the sporadic connections, in computing the product ($CMR_{TOT}$) of said sum (SOM) by said equivalent load ratio ($RA_{eq}$), and in accepting the connection request ($DC_k$) when said product ($CMR_{TOT}$) is lower than a total capacity available for the sporadic connections ($C_S$).

3. Method according to claim 2, in which connections with constant bit rates (D) are set up by the earth stations through said network, characterized in that said algorithm for a constant bit rate connection request consists in subtracting the constant bit rate (D) from the total available capacity ($C_S$) thereby establishing a second capacity ($C'_S$) available for the sporadic connections, in computing said product ($CMR_{TOT}$) for sporadic connections in process, and in accepting the constant bit rate connection request when said product ($CMR_{TOT}$) is lower than the second available capacity ($C'_S$).

4. Method according to any one of claims 1 to 3, characterized in that said predetermined constants ($L_{eq}$, $SP_{eq}$) are respectively equal to upper limits ($L_{sup}$, $SP_{sup}$) of the average lengths of the bursts ($LM_i$) and of sporadicnesses ($SP_i$) of all the connections.

FIG.1A

FAISCEAU A

SU$_1$ STATION D'USAGERS

SU$_i$ STATION D'USAGERS

SU$_l$ STATION D'USAGERS

IU$_1$ INTERFACE USAGER

ST$_1$ STATION TERRIENNE

INTERFACE USAGER — IU$_i$

STATION TERRIENNE — ST$_i$

INTERFACE USAGER — IU$_l$

STATION TERRIENNE — ST$_l$

SC STATION CENTRALE DE GESTION

RESSOURCES COMMUNES : CANAUX SATELLITE

SA

VERS FAISCEAU B

FIG.1B

a)  D$_{max}$

T

IT

message

b)  DR

cellule

FIG.2

T$_{r-1}$          T$_r$          T$_{r+1}$

| STS$_{r-1}$ | IT$_1$ | --- | IT$_i$ | --- | IT$_l$ | STS$_r$ | IT$_1$ | --- | IT$_i$ | --- | STS$_{r+1}$ |

| ITS$_1$ | ITS$_2$ | ----- | ITS$_i$ | ----- | ITS$_l$ | RPC |

# FIG.3
## (TECHNIQUE ANTERIEURE)

TDMA-RESERVATION

EP 0 535 762 B1

# FIG.4

ET1 — ATTENTE D'UNE RAFALE DANS $ST_i$

FIN DE TRANSMISSION RAFALE

DANS $ST_i$

DETECTION ITS$_i$

TRANSMISSION MESSAGE FIN $MF_i$

$ST_i \longrightarrow SC$

ET4

CALCUL LR DANS $ST_i$

ET3

DETECTION D'UN DEBUT D'UNE RAFALE

MEMORISATION DU DEBUT DE LA RAFALE DANS $ST_i$

ET2

DETECTION IT$_i$ ASSIGNE PAR SC

FIN MEMORISATION RAFALE

TRANSMISSION DE LA RAFALE DANS IT$_i$ + MEMORISATION DE LA RAFALE DANS $ST_i$

ET3'

DETECTION ITS$_i$ PAR $ST_i$

FIN TRANSMISSION MESSAGE $MD_i$

TRANSMISSION MESSAGE DEMANDE $MD_i$

$ST_i \longrightarrow SC$

ET2'

EP 0 535 762 B1

# FIG.5A

# FIG.5B
## (TECHNIQUE ANTERIEURE)

# FIG.5C

*FIG.6*

CAPACITE DISPONIBLE POUR CONNEXIONS SPORADIQUES $C_s$

CAPACITE TOTALE DU CANAL SATELLITE $C_t$

INTENSITE DU TRAFIC DES CONNEXIONS SPORADIQUES

INTENSITE DU TRAFIC DES CONNEXIONS CONTINUES

CAPACITE DE LA STS

*FIG.7*

$R_{99}$ (sec.)

SP=90

SP=45

SP=23

Lm

FIG.8

$$RA = \frac{C_S}{D_{max}} = 4$$

Lm = 100 cellules

FIG.9

SP = 100
Lm = 100 cellules

FIG.10

$R_{99}$(sec.)

$$RA = \frac{C_S}{D^i_{max}} = 4$$

$SP_i = 23$

HOMOGENE — HETEROGENE

$<Lm_i>$

FIG.11

$R_{99}$(sec.)

HETEROGENE

HOMOGENE

$Lm_i = 50$ cellules

$$RA_i = \frac{C_S}{D^i_{max}} = 4$$

$<SP_i>$

# FIG.12

CONNEXION k

$SPORADIQUE(D_{moy}^{k}, D_{max}^{k})$ — TYPE — CONTINUE(D)

DETERMINER $RA_{eq}$

$$SOM = \sum_{i=1}^{i=k} D_{moy}^{i}$$

$$CMR_{TOT} = RA_{eq} \cdot SOM$$

$C'_S = C_S - D$
DETERMINER $RA_{eq}$

$$SOM = \sum_{i=1}^{i=k} D_{moy}^{i}$$

$$CMR_{TOT} = RA_{eq} \cdot SOM$$

non — $CMR_{TOT} \leqslant C_S$ — oui

non — $CMR_{TOT} \leqslant C'_S$ — oui

REFUSER CONNEXION k

ACCEPTER CONNEXION k

REFUSER CONNEXION k

ACCEPTER CONNEXION k

SAUVEGARDER $D_{moy}^{k}$, $D_{max}^{k}$

$C_S = C'_S$

# FIG.13

sous-trame de
signalisation

STS$_r$

DE
SATELLITE
SA
(canal écho)

CIRCUIT
RECEPTION
(DEMODULATION
SYNCHRO.,......)

−135

INT

$\mu P$

130

MEMOIRE
PROGRAMME

131

BA

BD

| $D^1_{max}$ |
| $D^2_{max}$ |
| |
| $D^i_{max}$ |
| |
| $D^I_{max}$ |

132

| $D^1_{moy}$ |
| $D^2_{moy}$ |
| |
| $D^i_{moy}$ |
| |
| $D^I_{moy}$ |

133

ECR

LEC

| $DC_{i+3}$ |
| $DC_1$ |
| $DC_i$ |
| $DC_2$ |

134

136

CIRCUIT
EMISSION
(MODULATION
..........  )

RPC

VERS
SATELLITE
SA
POUR ST$_i$